# EUROPÄISCHE PATENTSCHRIFT

(11) **EP 1 844 886 B1**
(45) Veröffentlichungstag und Bekanntmachung des Hinweises auf die Patenterteilung: **19.08.2009**
(21) Anmeldenummer: 06007873.0
(22) Anmeldetag: 13.04.2006
(51) Int. Cl.: B23B 31/00

(54) **Spanneinrichtung**
Clamping device
Dispositif de serrage

(43) Veröffentlichungstag der Anmeldung: 17.10.2007
(73) Patentinhaber: Schunk GmbH & Co. KG Spann- und Greiftechnik, 74348 Lauffen (DE)
(72) Erfinder: Ralph, Peter, 74348 Lauffen (DE)
(74) Vertreter: Paul, Dieter-Alfred

(56) Entgegenhaltungen:
- WO-A-00/76703
- DE-A1- 19 827 101
- DE-C1- 19 834 739

## Beschreibung

Die vorliegende Erfindung betrifft eine Spanneinrichtung zum Spannen von Werkzeugen nach dem Oberbegriff des Anspruchs 1.

Spanneinrichtungen dieser Art sind beispielsweise aus der WO 00/76703 bekannt und dienen dazu, einen Werkzeugschaft wie beispielsweise einen Bohrer- oder Fräserschaft an der Arbeitsspindel einer entsprechenden Werkzeugmaschine zu fixieren. Sie werden insbesondere eingesetzt, um kleine Werkzeuge zu spannen.

Bei den aus der WO 00/76703 bekannten Spanneinrichtungen werden die Werkzeuge durch einen Schrumpfsitz gespannt. Sie bestehen hierzu in der Regel aus einem Grundkörper aus Metall, der eine zentrale Aufnahme für den Schaft des zu spannenden Werkzeugs aufweist. Der Durchmesser der Aufnahme ist dabei so bemessen, daß er etwas kleiner ist als der Durchmesser des Werkzeugschaftes. Zum Spannen des Werkzeugs wird der Grundkörper zumindest im Bereich der Aufnahme erwärmt, bis sich diese soweit thermisch ausgedehnt hat, daß der Werkzeugschaft in sie eingesetzt werden kann. Beim abschließenden Abkühlen schrumpft die Aufnahme wieder, so daß der Werkzeugschaft in der Aufnahme durch Preß- oder Schrumpfsitz fixiert wird.

Alternativ können andere Spannmechanismen eingesetzt werden. In Frage kommen beispielsweise die Spannmechanismen der sogenannten Tribos-Spannfutter der Anmelderin, welche in der DE 198 27 101 C1 sowie der DE 198 34 739 A1 beschrieben sind.

Solche Spanneinrichtungen haben sich in der Praxis durchaus bewährt. Aufgrund der harten Einspannung des Schaftes können im Gebrauch jedoch Abwalkeffekte, die bis zum Bruch des Vollhartmetallschaftes des Werkzeugs führen können, auftreten. Aus diesem Grund wird in der WO 00/76703 vorgeschlagen, um die Aufnahme herum einen Dämpfungsraum vorzusehen. Durch diese Ausgestaltung wird die Einspannung des Werkzeugschaftes "weicher" mit der Folge, daß aufgrund einer harten Einspannung des Schaftes auftretende "Kardaneffekte", die zum Werkzeugbruch führen können, ausgeschlossen bzw. weitgehend verhindert werden können.

Als nachteilig wird jedoch angesehen, daß sich in den Dämpfungshohlräumen Späne etc. ansammeln können. Da solche Späneansammlungen in den Dämpfungshohlräumen ungleichmäßig erfolgen, führen sie zwangsläufig zu einer Unwucht, die bei den zum Teil sehr hohen Rotationsgeschwindigkeiten von werkzeugmaschinen nachteilig sind.

Außerdem wird als nachteilig angesehen, daß beim Einsatz von Werkzeugen mit innerer Kühlmittelzufuhr insbesondere bei Spannmechanismen, die nach der Tribos-Technologie der Anmelderin arbeiten, die Kühlflüssigkeit durch Spalte, welche sich zwischen der Aufnahme und dem gespannten Werkzeug bilden, zur werkzeugseitigen Stirnfläche der Spanneinrichtung gelangen und austreten kann.

Aufgabe der Erfindung ist es daher, eine Spanneinrichtung der eingangs genannten Art so auszugestalten, daß Unwuchten im wesentlichen vermieden werden und weiterhin auch ein Austritt von Kühlflüssigkeit verhindert wird.

Diese Aufgabe ist erfindungsgemäß durch eine Spanneinrichtung mit den Merkmalen des Anspruchs 1 gelöst.

Der Erfindung liegt damit die Überlegung zugrunde, den Ringraum zumindest teilweise zu verschließen und so dem Eintritt von Spänen etc. entgegenzuwirken.

Der hierfür in den Ringraum eingesetzte Deckel weist zusätzlich Dichtungsmittel in Form wenigstens eines in die Ringnut des Deckels eingesetzten Dichtungsrings auf, welcher aktiv zusammengedrückt werden kann, daß er sich an den Umfang eines in die Aufnahme eingesetzten Werkzeugschaftes anlegt und auf diese Weise den aufnahmeseitigen Ringspalt abdichtet, indem die Ringnut mit einer Flüssigkeit beaufschlagt wird. Wenn der Flüssigkeitsdruck wieder reduziert wird, drängt der Dichtungsring aufgrund seiner elastischen Rückstellkraft in seine Ausgangsposition zurück. Aufgrund dieser Ausgestaltung kann im Betrieb insbesondere beim Einsatz von Werkzeugen mit innerer Kühlmittelzufuhr ein Austreten von Kühlmittel an der werkzeugseitigen Stirnfläche der Spanneinrichtung wirksam verhindert werden. Dabei können Werkzeuge in die Aufnahme eingesetzt werden, ohne daß der Dichtungsring beschädigt wird, da der Innendurchmesser des Dichtungsrings größer als der Schaftdurchmesser des Werkzeugs sein kann.

In Ausbildung der Erfindung kann vorgesehen sein, daß die in der aufnahmeseitigen Innenwandung des Deckels ausgebildete Ringnut über den Flüssigkeitszuführkanal mit einer Kühlflüssigkeit versorgt wird, welche der Spanneinrichtung zur Kühlung des Werkzeugs zugeführt wird. Diese Ausführungsform ist insbesondere geeignet, wenn die Spanneinrichtung für den Einsatz von Werkzeugen mit innerer Kühlmittelzufuhr ausgelegt und entsprechend mit inneren Kühlmittelversorgungsleitungen ausgestattet ist.

Gemäß einer Ausführungsform der Erfindung ist vorgesehen, daß der Flüssigkeitszuführkanal einen in dem Grundkörper ausgebildeten und in die grundkörperseitige Stirnfläche des Deckels mündenden Kanalabschnitt und einen sich daran anschließenden, im Deckel ausgebildeten Kanalabschnitt, der zum Ringraum offen ist und beispielsweise als Sackbohrung ausgebildet sein kann, aufweist. Auch können mehrere Flüssigkeitszuführkanäle vorgesehen sein, um die in der aufnahmeseitigen Innenwandung des Deckels ausgebildete Ringnut mit Flüssigkeit zu versorgen. In diesem Fall sind die Flüssigkeitszuführkanäle zweckmäßigerweise gleichmäßig verteilt in Umfangsrichtung des Deckels angeordnet.

Gemäß einer bevorzugten Ausführungsform der Erfindung ist hierbei vorgesehen, daß der Deckel derart ausgebildet und in dem Ringraum fixiert ist, daß die statische Steifigkeit der Spanneinrichtung im wesentlichen nicht beeinflußt wird.

In weiterer Ausbildung der Erfindung ist vorgesehen, daß der Deckel als Dämpfungselement ausgebildet und vorzugsweise in dem Ringraum frei schwingend aufgehängt ist. Beispielsweise ist es möglich, den Deckel in dem Ringraum durch einen O-Ring oder mehrere O-Ringe frei schwingend zu halten. Dieser Ausführungsform der Erfindung liegt die Überlegung zugrunde, gezielt im äußersten Bereich der Werkzeugeinspannung, wo im Betrieb die größten Schwinggeschwindigkeiten auftreten, eine Dämpfung vorzunehmen, und zwar über den Deckel, welcher in dem Ringraum schwingend, das heißt mit Spiel und elastisch abgefedert, angebracht ist, so daß eine Relativbewegung zwischen dem Deckel und dem Grundkörper stattfinden kann. Damit stellt die erfindungsgemäße Spanneinrichtung einen Mehrmassenschwinger dar, dessen Dämpfungseigenschaften durch Einsatz unterschiedlich ausgebildeter Deckel verändert werden kann mit der Folge, daß auf verschiedenste Frequenzen gedämpft und somit die Eigenfrequenz der Spanneinrichtung eingestellt werden kann. Durch eine Variation der Länge L des Deckels - in Axialrichtung der Spanneinrichtung betrachtet - läßt sich die Dämpfung fest einstellen.

Hierbei ergibt eine kleine Länge L eine niedrigere Dämpfung, während eine größere Länge L eine höhere Dämpfung ergibt. Weitere Beeinflussungsmöglichkeiten ergeben sich durch die Werkstoffdichte des Deckels. Versuche haben gezeigt, daß sich schon mit kleinen Dämpfungsmassen gute Ergebnisse erzielen lassen. Kleine Massen sind dabei für das rotierende System wichtig, da die Trägheitskräfte beim Beschleunigen und Abbremsen klein gehalten werden können.

Wenn O-Ringe verwendet werden, um den Deckel in dem Ringraum zu fixieren, können in der Außenwandung des Deckels und/oder der Innenwandung des Ringraums Nuten zur Aufnahme der O-Ringe vorgesehen sein. Zusätzlich ist es zweckmäßig, den Deckel in dem Ringraum durch Form- und/oder Reibschlußverbindungen sicher an einem Herausfallen zu hindern. Gemäß einer bevorzugten Ausführungsform ist vorgesehen, daß der Deckel in dem Ringraum durch einen Sprengring gesichert ist, der in korrespondierende Ringnuten an der Außenwandung des Deckels und der Innenwandung des Ringraums eingreift.

Hinsichtlich weiterer vorteilhafter Ausgestaltung der Erfindung wird auf die Unteransprüche sowie die nachfolgende Beschreibung unter Bezugnahme auf die beiliegende Zeichnung verwiesen. In der Zeichnung zeigt
- Figur 1: eine Ausführungsform einer Spanneinrichtung gemäß der vorliegenden Erfindung in teilweise geschnittener Vorderansicht,

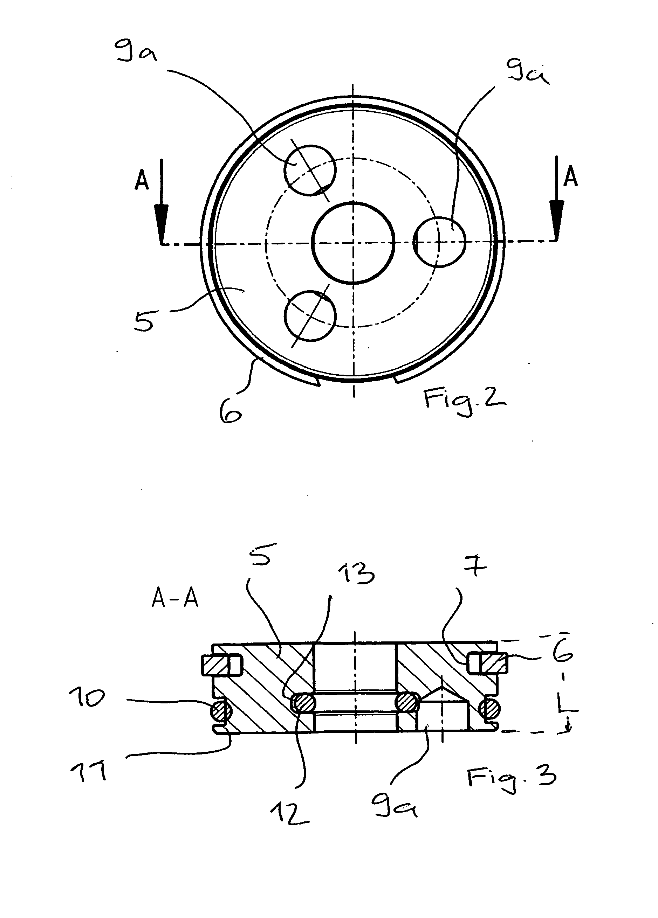

- Figur 2: einen Deckel zum Verschließen des Ringraums der Spanneinrichtung gemäß der Figur 1 in vergrößerter Vorderansicht, und
- Figur 3: den Deckel im Schnitt entlang der Linie A-A- in Figur 2.

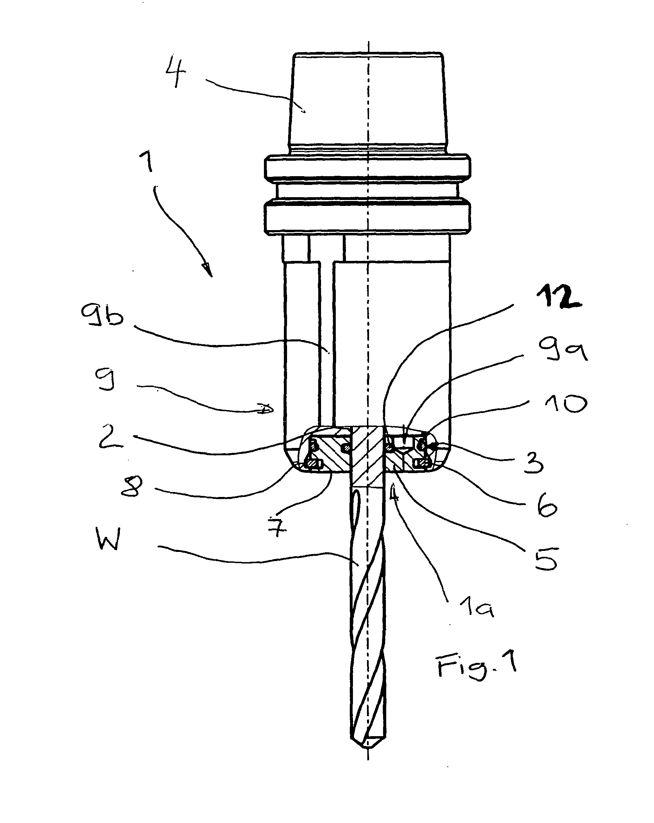

In der Figur 1 ist eine Ausführungsform einer Spanneinrichtung zum Spannen von Werkzeugen gemäß der vorliegenden Erfindung dargestellt, die hier als Spannfutter ausgebildet ist, aber auch beispielsweise direkt in die Arbeitsspindel einer Werkzeugmaschine integriert sein kann. Das Spannfutter umfaßt einen Grundkörper 1 aus einem formsteifen Material wie beispielsweise Stahl, der an seinem einen Endbereich eine zentrale Aufnahme 2 für den zylindrischen Schaft eines zu spannenden Werkzeugs W, hier eines Bohrers, aufweist. An seinem anderen Endbereich weist der Grundkörper 1 in an sich bekannter Weise eine Schnittstelle 4 zur Einspannung in die Arbeitsspindel einer Werkzeugmaschine auf.

In dem Grundkörper 1 ist ein Ringraum 3 vorgesehen, welcher den vorderen Bereich der Aufnahme 2 umgibt und zur werkzeugseitigen Stirnfläche 1a des Grundkörpers sowie zur Aufnahme 2 hin offen ist. In den Ringraum 3 ist ein ringförmiger Deckel 5 eingesetzt und durch einen Sprengring 6, der in korrespondierende Ringnuten 7, 8 in der Außenwandung des Deckels 5 und der Innenwandung des Ringraums 3 eingreift, axial fixiert. Dabei wird der zwischen der Außenwandung des Deckels 5 und der Innenwandung des Ringraums 3 gebildete Ringspalt durch einen O-Ring 10 abgedichtet, welcher in eine weitere Ringnut 11 in der Außenwandung des Deckels 5 gehalten ist.

Des weiteren ist an der Innenwandung des Deckels 5 eine Ringnut 13 ausgebildet, in welche ein Dichtungsring, der hier als O-Ring 12 ausgebildet ist, eingesetzt ist. Der O-Ring 12 besitzt einen Innendurchmesser, der etwas größer ist als der Durchmesser der Aufnahme 2 bzw. des zu fügenden Werkzeugschaftes. Er kann jedoch durch Beaufschlagung mit einem Hydraulikdruck elastisch zusammengedrückt und auf diese Weise gegen den Schaft eines gespannten Werkzeugs W gedrückt werden, um den zwischen der Deckel-innenwandung und dem Werkzeug W gebildeten Spalt abzudichten. Hierzu ist die Ringnut 13 über drei Kühlmittelzuführkanäle 9 an einen nicht näher dargestellten zentralen Kühlmittelzuführkanal angeschlossen, über welchen die Spanneinrichtung mit einer externen Kühlmittelquelle verbunden ist, um die Spanneinrichtung beim Einsatz von Werkzeugen mit innerer Kühlmittelzufuhr mit Kühlmittel zu versorgen. Wie die Figuren gut erkennen lassen, sind die drei Flüssigkeitszuführkanäle 9 gleichmäßig verteilt, d.h. mit etwa 120° Versatz gegeneinander, um die Ringnut 13 angeordnet und erstrecken sich im wesentlichen axial durch die Spanneinrichtung. Sie besitzen jeweils einen in dem Deckel 5 vorgesehenen Kanalabschnitt 9a, der in Form einer stirnflächig in den Deckel 5 eingebrachten und sich mit der Ringnut 13 in ihrem äußeren Umfangsbereich überschneidenden Sackbohrung ausgebildet ist, und einen sich daran anschließenden Kanalabschnitt 9a, welcher in dem Grundkörper 1 ausgebildet ist und in den zentralen Kühlmittelversorgungskanal der Spanneinrichtung mündet.

Wenn im Betrieb ein Werkzeug W in der Spanneinrichtung fixiert ist und die Kühlmittelzufuhr der Spanneinrichtung eingeschaltet wird, baut sich in der Ringnut 13 ein Druck auf mit der Folge, daß der O-Ring 12 elastisch gegen den gespannten Werkzeugschaft gedrückt wird und auf diese weise den Ringspalt zwischen dem Deckel 5 und dem Werkzeug W abdichtet.

Bei der dargestellten Spanneinrichtung bildet der Deckel 5 ein Dämpfungselement, welches gegenüber dem Grundkörper 1 Relativbewegungen ausführen kann. Damit stellt die erfindungsgemäße Spanneinrichtung 1 einen Massenschwinger dar, dessen Dämpfungseigenschaften durch Einsatz unterschiedlicher Deckel 5 verändert werden kann mit der Folge, daß auf verschiedene Frequenzen gedämpft und somit die Eigenfrequenz der Spanneinrichtung eingestellt werden kann. Variationsmöglichkeiten bestehen dabei hinsichtlich der Länge L, die Dichte und Härte des Deckels 5. Dabei erfolgt die Dämpfung gezielt im äußeren Bereich der Werkzeugeinspannung, wo im Betrieb die größten Schwinggeschwindigkeiten auftreten.

## Patentansprüche

1. Spanneinrichtung zum Spannen von Werkzeugen mit einem Grundkörper (1), in dem eine zentrale Aufnahme (2) für den Schaft eines zu spannenden Werkzeugs (W) sowie ein die Aufnahme (2) umgebender, Ringraum (3) ausgebildet ist, wobei der Ringraum (3) zur werkstücksseitigen Stirnfläche (1a) des Futterkörpers (1) sowie zur Aufnahme (2) hin offen ist, **dadurch gekennzeichnet, daß** der Ringraum (3) durch einen Deckel (5) verschlossen ist, der in den Ringraum (3) von der offenen Stirnfläche (1a) her eingesetzt und in dem Ringraum (3) fixiert ist, und daß in der aufnahmeseitigen Innenwandung des Deckels (5) eine Ringnut (13) ausgebildet ist, in welcher ein Dichtungsring (12) angeordnet ist, wobei die Ringnut (13) an einen Flüssigkeitszuführkanal (9a, 9b) angeschlossen ist, über welchen der Ringnut (13) eine Flüssigkeit zugeführt werden kann, um den in die Ringnut (13) eingesetzten Dichtungsring (12) nach innen zu drücken und so einen zwischen dem Deckel (5) und einem in die Aufnahme (29 eingesetzten Werkzeug (W) gebildete Spalt aktiv abzudichten.

2. Spanneinrichtung nach Anspruch 1, **dadurch gekennzeichnet, daß** die in der aufnahmeseitigen Innenwandung des Deckels (5) ausgebildete Ringnut (13) über den Flüssigkeitszuführkanal (9a, 9b) mit einer Kühlflüssigkeit versorgt wird, welche der Spanneinrichtung zur Kühlung des Werkzeugs (W) zugeführt wird.

3. Spanneinrichtung nach Anspruch 1 oder 2, **dadurch gekennzeichnet, daß** der Flüssigkeitszuführkanal (9a, 9b) einen in dem Grundkörper (1) ausgebildeten und in die grundkörperseitige Stirnfläche des Deckels (5) mündenden Kanalabschnitt (9b) und einen sich daran anschließenden, im Deckel (5) ausgebildeten Kanalabschnitt (9a) aufweist.

4. Spanneinrichtung nach einem der vorherigen Ansprüche, **dadurch gekennzeichnet, daß** mehrere Flüssigkeitszuführkanäle (9a, 9b) vorgesehen sind, um die in der aufnahmeseitigen Innenwandung des Deckels (5) ausgebildete Ringnut (13) mit Flüssigkeit zu versorgen.

5. Spanneinrichtung nach Anspruch 4, **dadurch gekennzeichnet, daß** die Flüssigkeitszuführkanäle (9a, 9b) gleichmäßig verteilt in Umfangsrichtung des Deckels (5) angeordnet sind.

6. Spanneinrichtung nach Anspruch 5, **dadurch gekennzeichnet, daß** der Deckel (5) derart ausgebildet und in dem Ringraum (3) fixiert ist, daß die statische Steifigkeit des Grundkörpers (1) im wesentlichen nicht beeinträchtigt wird.

7. Spanneinrichtung nach Anspruch 5 oder 6, **dadurch gekennzeichnet, daß** der Deckel (5) als Dämpfungselement ausgebildet und in dem Ringraum (3) frei schwingend aufgehängt ist.

8. Spanneinrichtung nach Anspruch 7, **dadurch gekennzeichnet, daß** der Deckel (5) in dem Ringraum (3) durch wenigstens einen O-Ring (10) schwingend gehalten ist.

9. Spanneinrichtung nach Anspruch 8, **dadurch gekennzeichnet, daß** in der Außenwandung des Deckels (5) und/oder der Wandung des Ringraumes (3) eine Nut (13) zur Aufnahme des wenigstens einen O-Rings (10) vorgesehen ist.

10. Spanneinrichtung nach einem der vorherigen Ansprüche, **dadurch gekennzeichnet, daß** der Deckel (5) in dem Ringraum (3) durch einen Sprengring (6) gesichert ist.

## Claims

1. A clamping device for clamping tools, having a basic body (1) in which are configured a central receptacle (2) for the shaft of a tool (W) to be clamped, as well as an annular space (3) surrounding the receptacle (2), the annular space (3) being open toward the workpiece-side end surface (1a) of the chuck body (1) and toward the receptacle (2), wherein the annular space (3) is closed off by an cover (5) that is inserted into the annular space (3) from the open end face (1a) and is immobilized in the annular space (3); and there is configured in the receptacle-side inner wall of the cover (5) an annular groove (13) in which a sealing ring (12) is arranged, the annular groove (13) being connected to a liquid delivery conduit (9a, 9b) through which a liquid can be delivered to the annular groove (13) in order to press inward the sealing ring (12) that is inserted into the annular groove (13) and thus actively seal a gap formed between the cover (5) and a tool (W) inserted into the receptacle (2).

2. The clamping device according to claim 1, wherein the annular groove (13) configured in the receptacle-side inner wall of the cover (5) is supplied via the liquid delivery conduit (9a, 9b) with a cooling liquid that is delivered to the clamping device in order to cool the tool (W).

3. The clamping device according to claim 1, wherein the liquid delivery conduit (9a, 9b) comprises a conduit portion (9b) configured in the basic body (1) and opening into the basic-body-side end surface of the cover (5), and a conduit portion (9a) adjacent thereto and configured in the cover (5).

4. The clamping device according to claim 1, wherein multiple liquid delivery conduits (9a, 9b) are provided in order to supply liquid to the annular groove (13) configured in the receptacle-side inner wall of the cover (5).

5. The clamping device according to claim 4, wherein the liquid delivery conduits (9a, 9b) are arranged with a regular distribution in the circumferential direction of the cover (5).

6. The clamping device according to claim 5, wherein the cover (5) is configured, and immobilized in the annular space (3), in such a way that the static stiffness of the basic body (1) is substantially not impaired.

7. The clamping device according to claim 5, wherein the cover (5) is embodied as a damping element and is suspended in freely oscillating fashion in the annular space (3).

8. The clamping device according to claim 7, wherein the cover (5) is retained in freely oscillating fashion in the annular space (3) by means of at least one O-ring (10).

9. The clamping device according to claim 8, wherein a groove (13) for receiving the at least one O-ring (10) is provided in the outer wall of the cover (5) and/or the wall of the annular space (3).

10. The clamping device according to claim 1, wherein the cover (5) is secured in the annular space (3) by a snap ring (6).

## Revendications

1. Dispositif de serrage pour le serrage d'outils avec un corps de base (1), dans lequel un logement centrale (2) est prévue pour le tige d'un outil (w) destiné à être serré ainsi qu'une espace annulaire (3) entourant le logement (2), où l'espace annulaire (3) s'ouvre sur la face frontale sur le côté de la pièce à travailler (1a) du corps de mandrin (1) ainsi que sur le logement (2), **caractérisé en ce que** l'espace annulaire (3) est verrouillée par un couvercle (5), qui est introduit dans l'espace annulaire (3) à partir de la face frontale ouverte (1a) et fixé dans l'espace annulaire (3), et qu'une rainure circulaire (13) est prévue dans la paroi interne du couvercle (5) sur le côté du logement dans lequel un joint d'étanchéité (12) est disposé, où la rainure circulaire (13) est connectée à un conduit d'alimentation du liquide (9a, 9b), par lequel un liquide peut être alimenté à la rainure circulaire (13), afin de pousser vers l'intérieur le joint d'étanchéité (12) introduit dans la rainure circulaire (13) et ainsi de rendre étanche activement l'intervalle formé entre le couvercle (5) et un outil (w) introduit dans le logement (2).

2. Dispositif de serrage selon revendication 1, **caractérisé en ce que** la rainure circulaire (13) prévue dans la paroi interne du couvercle (5) surle côté du logement est alimentée via le conduit d'alimentation du liquide (9a, 9b) par un liquide de refroidissement, lequel est amené au dispositif de serrage pour le refroidissement de l'outil (w).

3. Dispositif de serrage selon revendication 1 ou 2, **caractérisé en ce que** le conduit d'alimentation du liquide (9a, 9b) présente une section de conduit (9b) prévue dans le corps de base (1) et débouchant sur a la face frontale du couvercle (5) située sur le côté du corps de base, et une section de conduit (9a) prévue dans le couvercle (5) et y étant connectée.

4. Dispositif de serrage selon l'une des revendications précédentes, **caractérisé en ce que** plusieurs conduits d'alimentation du liquide (9a, 9b) sont prévus, afin d'alimenter un liquide a la rainure circulaire (13) conçue dans la paroi interne a liste du logement du couvercle (5).

5. Dispositif de serrage selon revendication 4, **caractérisé en ce que** les conduits d'alimentation du liquide (9a, 9b) sont répartis uniformément dans le sens de la périphérie du couvercle (5).

6. Dispositif de serrage selon revendication 5, **caractérisé en ce que** le couvercle (5) est ainsi conçu et fixé dans la face annulaire (3), que la rigidité statique du corps de base (1) n'en est essentiellement pas réduite.

7. Dispositif de serrage selon revendication 5 ou 6, **caractérisé en ce que** le couvercle (5) est conçu en tant qu'élément d'amortissement et qu'il est suspendu en oscillant librement dans la face annulaire (3).

8. Dispositif de serrage selon revendication 7, **caractérisé en ce que** le couvercle (5) est maintenu en oscillant dans la face annulaire (3) par au moins un anneau O (10).

9. Dispositif de serrage selon revendication 8, **caractérisé en ce que** dans la paroi extérieure du couvercle (5) et/ou de la paroi de l'espace annulaire (3) une rainure (13) est prévue pour l'admission d'au moins un anneau O (10).

10. Dispositif de serrage selon l'une des revendications précédentes, **caractérisé en ce que,** le couvercle (5) est bloqué dans l'espace annulaire (3) par un circlips (6).
